# EUROPEAN PATENT APPLICATION

(11) **EP 4 588 832 A1**
(43) Date of publication of application: **23.07.2025**
(21) Application number: 24153033.6
(22) Date of filing: 22.01.2024
(51) Int. Cl.: B65G 1/04

(54) **A STORAGE AND RETRIEVAL SYSTEM**

(71) Applicant: AUTOSTORE TECHNOLOGY AS, 5578 Nedre Vats (NO)
(72) Inventor: Gjerdevik, Øystein, 5578 Nedre Vats (NO)
(74) Representative: Kilburn & Strode LLP

(57) **Abstract**

The disclosure relates to a storage and retrieval system for storage containers. The system comprises a plurality of storage columns arranged in a grid, each storage column configured to store at least one storage container, and a plurality of storage containers comprising at least a cardboard storage container, the plurality of storage containers arranged in the plurality of storage columns. The system further comprises a container handling vehicle configured to retrieve a storage container of the plurality of storage containers from a storage column of the plurality of storage columns, wherein the cardboard storage container is configured to be retrieved by the container handling vehicle.

## Description

### TECHNICAL FIELD

The disclosure relates to a storage and retrieval system. More particularly, it relates to a storage and retrieval system for storage containers, comprising at least a cardboard storage container, and a method of retrieving a cardboard storage container in the storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Storage containers, also referred to as 'bins', are typically reusable, and are returned to the grid after goods are delivered to a packing station or port. To facilitate reuse, storage containers are typically made of plastic or similar materials. Storage containers are dimensioned to fit a standard structure of the storage and retrieval system, so that the storage containers can be stacked in one or more vertical stacks within the three-dimensional grid of the storage and retrieval system.

After a storage container has been delivered to a packing station or port by the storage and retrieval system, the goods to be delivered need to be retrieved from the storage container by human or robotic operators, and packed for shipping to their destination. Such operations add to the time spent at the packing station. In addition, packaging the retrieved goods for shipping adds further cost to the process. The present inventors have recognised that it would be advantageous to provide systems or methods which address these shortcomings of existing storage and retrieval systems.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A-C shows embodiments of a cardboard storage container.

### DETAILED DESCRIPTION

In overview, the disclosure relates to a storage and retrieval system comprising at least one cardboard storage container. The cardboard storage container is configured to be retrieved by a container handling vehicle of the storage and retrieval system, which enables the use of the cardboard storage container in the system as a one-time use bin (or one-time use storage container). A one-time use bin, or one-time use storage container, may also be referred to as a single-use or disposable bin. By utilising a cardboard storage container in the storage and retrieval system, goods stored in the cardboard storage container can be retrieved by a container handling vehicle, and transported to a target location, without the need for goods to be retrieved from the storage container itself by human or robotic operators. For example, the goods stored in the cardboard storage container can be retrieved from the storage and retrieval system and transported directly to their shipping destination in the cardboard storage container. In this way, time spent at packing stations is reduced and the shipping process is expedited for the goods in the cardboard storage container.

### Automated storage and retrieval system overview

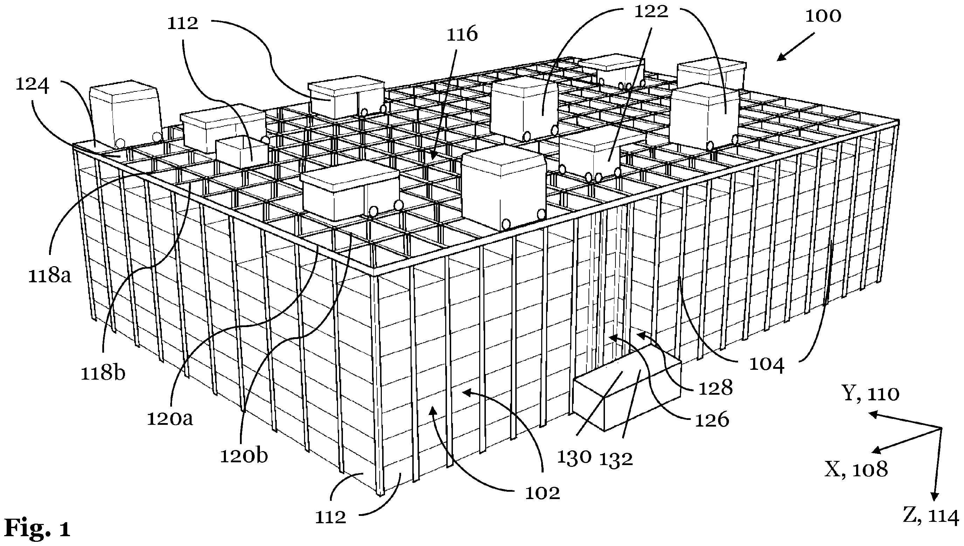

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

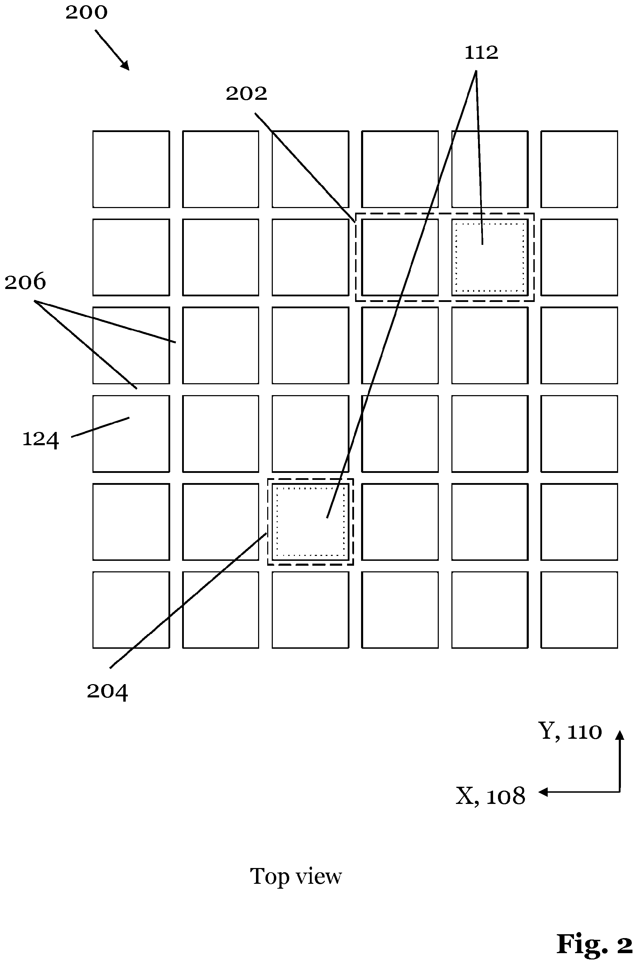

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

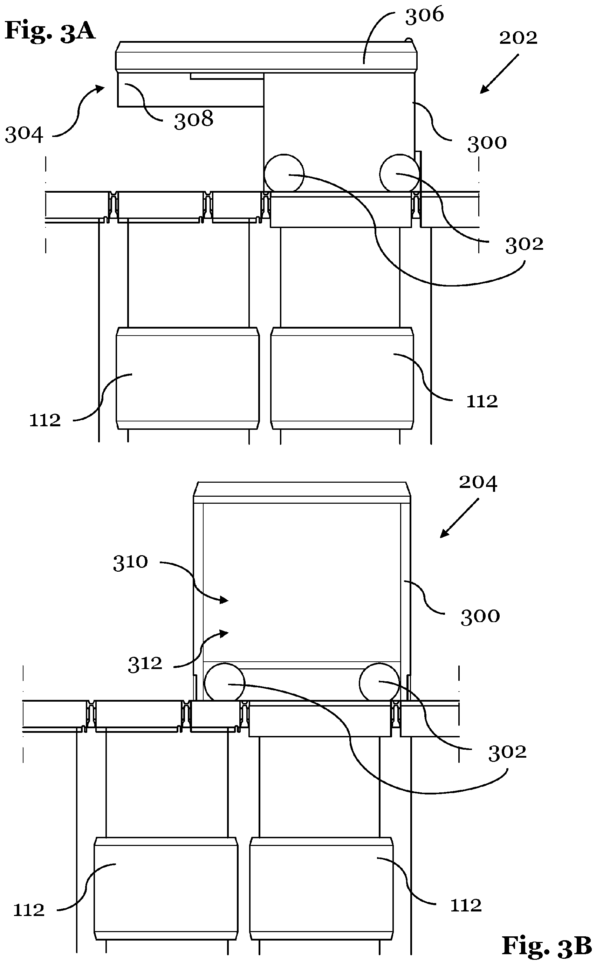

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

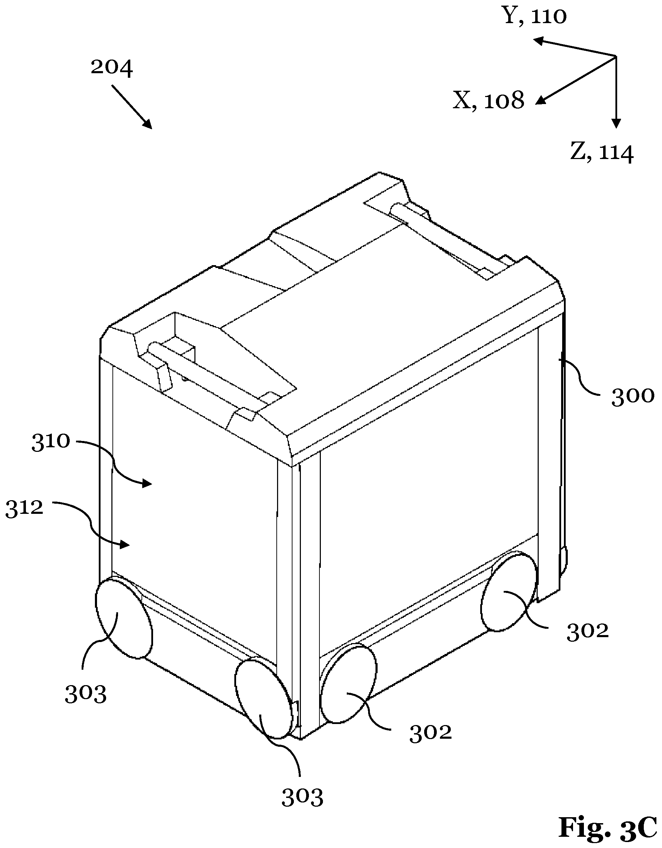

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

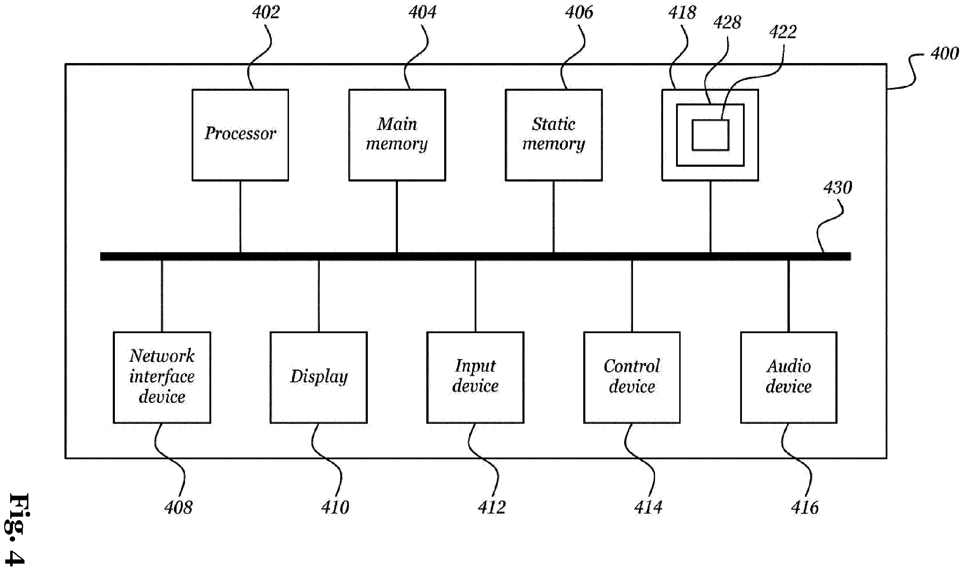

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term `computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Cardboard storage container

Provided herein is an implementation of the above-described storage and retrieval system for storage containers. As noted above, the system comprises a plurality of storage columns, arranged in a grid, where each storage column is configured to store at least one storage container. In other words, each storage column in the grid is configured to accommodate one or more storage containers. Each storage column of the plurality of storage columns can be configured to store a plurality of storage containers in a vertical stack. The system also comprises a plurality of storage containers, the plurality of storage containers arranged in the plurality of storage columns, and a container handling vehicle configured to retrieve a storage container of the plurality of storage containers from a storage column of the plurality of storage columns.

The plurality of storage containers in the storage and retrieval system comprises at least a cardboard storage container, wherein the cardboard storage container is configured to be retrieved by the container handling vehicle. The cardboard storage container may otherwise have the same or similar features to the other storage containers in the system. In other words, the cardboard storage container may differ from the storage containers conventionally used in the system only as it is formed from cardboard. The cardboard storage container is dimensioned to fit a standard structure of the storage and retrieval system, so that it may be accommodated within the storage and retrieval system.

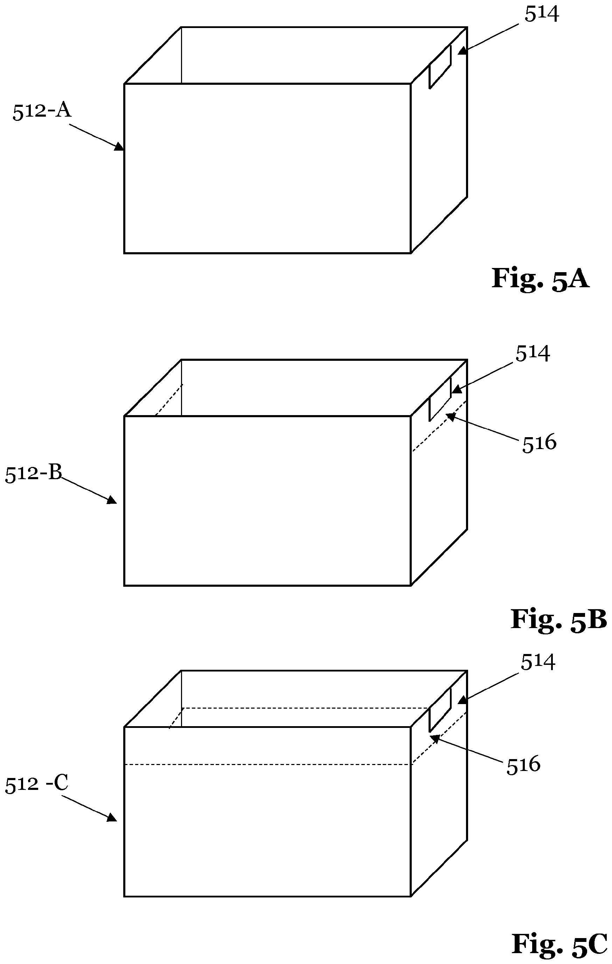

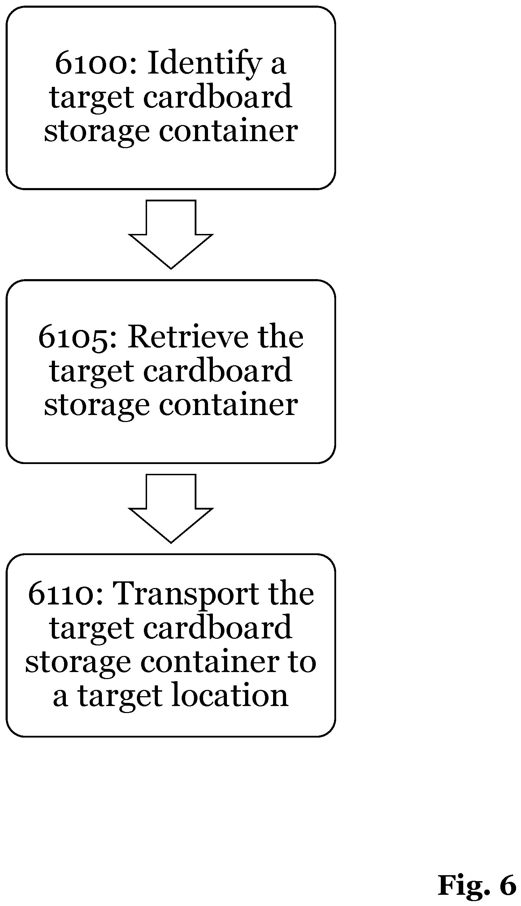

An exemplary embodiment of the cardboard storage container 512-A is shown in Fig.5A. The cardboard storage container 512-A may be wholly or partially formed of cardboard. In implementations where the storage container 512-A is formed partially of cardboard, the majority (i.e. at least half) of the storage container is formed of cardboard.

The storage container 512-A may comprise one or more recesses 514, the one or more recesses 514 configured to engage with a container handling vehicle. The inclusion of one or more recesses configured in this manner allows the container handling vehicle to engage directly with the cardboard storage container, and thus enables the cardboard storage container to be transported directly from the storage and retrieval system to a target location. The one or more recesses may be located at or near a rim of the cardboard storage container, as shown in Fig. 5A. The one or more recesses may extend partially or fully into the cardboard storage container 512-A. In some implementations, the one or more recesses may form one or more handles in or on the storage container 512-A, wherein the one or more handles are configured for engagement with a container handling vehicle.

The cardboard storage container is dimensioned to fit a standard structure of the grid, and in some implementations comprises a first side wall and a second side wall, with the first side wall opposing the second side wall. In such implementations, the one or more recesses may be located in one or more side walls of the storage container, i.e. in the first side wall and/or the second side wall. In further implementations, the cardboard storage container may comprise a first end wall, and a second end wall, where the first end wall opposes the second end wall. In such implementations, the one or more recesses may be located in one or more end walls of the cardboard storage container. In other implementations, the one or more recesses may be located in a combination of one or more side walls and one or more end walls. In other words, in configurations comprising two or more recesses, the two or more recesses are not required to be in opposing side walls or opposing end walls. In yet other implementations, a recess of the one or more recesses may be located in each wall of the cardboard storage container.

Typically, when a container handling vehicle engages with a storage container via engagement with the one or more recesses, a relatively large amount of force acts on the region around the one or more recesses. This force can depend on the weight of the goods in the container, and for heavier goods the force may be such that the cardboard storage container is damaged as a result. The present inventors have thus recognised that providing one or more reinforced regions 516 around the one or more recesses 514, as illustrated in Fig. 5B and Fig.5C, improves engagement of the container handling vehicle with the one or more recesses, and reduces any potential damage to the cardboard storage container. For example, providing a cardboard storage container with one or more reinforced regions around the one or more recesses may prevent the cardboard storage container from being damaged (e.g. via ripping, tearing or the like) when being lifted and/or transported by the container handling vehicle.

In the exemplary embodiment shown in Fig.5B, the cardboard storage container 512-B comprises a reinforced region 516 around recess 514, on each of a first and second side wall. In the exemplary embodiment shown in Fig.5C, the cardboard storage container comprises a reinforced region 516 around recess 514, on each of a first and second side wall, and also comprises reinforced regions 516 on the first and second end walls. As would be clear to the skilled person, these embodiments are merely exemplary, and many different configurations of the one or more reinforced regions are possible.

A reinforced region may be a region of increased rigidity, and may, for example, be composed of a material other than cardboard. For example, the one or more reinforced regions may comprise plastic, wood, or the like. In other examples, the reinforced region may comprise reinforced cardboard.

In some implementations, two or more cardboard storage containers may be configured to be stackable in a vertical stack in a storage column. In such implementations, each cardboard storage container can comprise one or more reinforced walls. The one or more reinforced walls may be fully or partially reinforced, in order to provide sufficient rigidity to the cardboard storage containers to allow stacking. In some implementations, the first side wall and second side wall may be reinforced walls. In the same or other implementations, the first and second end walls are reinforced walls.

A reinforced wall may be a wall which comprises a rigid frame. The rigid frame may provide support or rigidity to the cardboard storage container, enabling the cardboard storage container to be stacked in a vertical stack. In other words, the rigid frame may provide the support or rigidity needed for the cardboard storage container to withstand the weight or load of a further cardboard storage container stacked directly above the cardboard storage container in a vertical stack. In some implementations, enough support or rigidity may be provided to enable the cardboard storage container to withstand the weight or load of a conventional storage container stacked directly above the cardboard storage container in a vertical stack. The frame may be constructed in a number of geometries, and may form part or all of the respective wall or walls of the cardboard storage container. The frame can be formed of any material which provides sufficient rigidity and support for the cardboard storage container to be stackable - for example, the frame may be formed of plastic, wood, reinforced cardboard, or the like.

The plurality of storage containers in the storage and retrieval system may comprise a subset of cardboard storage containers. In other words, the plurality of storage containers in the system may comprise a plurality of cardboard storage containers. Each cardboard storage container of the subset of cardboard storage containers may be positioned in the uppermost position in a respective storage column. In implementations where at least one cardboard storage container comprises one or more reinforced walls, the at least one cardboard storage container comprising reinforced walls may be in a position other than the uppermost position in a respective storage column. In other words, the at least one cardboard storage container comprising reinforced walls may be part of a vertical stack of storage containers, where at least one storage container is stacked above the cardboard storage container. The cardboard storage containers of the plurality of cardboard storage containers may comprise any combination of the features discussed herein, and as such may comprise a number of cardboard storage containers without reinforced walls located in the uppermost positions of respective storage columns, while also comprising a number of cardboard storage containers with reinforced walls stacked within the vertical stacks of storage containers.

In some implementations, the plurality of storage containers consists of cardboard storage containers. Such a storage and retrieval system may comprise a plurality of storage columns arranged in a grid, wherein each storage column is configured to store only one storage container. In this way, a single-layer grid of cardboard storage containers is formed.

The cardboard storage container may be configured to be used as a shipping container. As noted above, the cardboard storage container is configured to be retrieved by a container handling vehicle of the system, wherein the container handling vehicle can transport the cardboard storage container to a target location. In embodiments where the cardboard storage container is configured to be used as a shipping container, the goods stored in the cardboard storage container can be retrieved from the storage and retrieval system and transported directly to their shipping destination in the cardboard storage container. In this way, the shipping process is expedited, avoiding time spent at packing stations and avoiding the associated costs.

The storage and retrieval system may further comprise a gripping tool configured to engage with the at least one cardboard storage container. In such implementations, as an alternative to the container handling vehicle engaging directly with the cardboard storage container, the gripping tool may engage with the cardboard storage container, where the container handling vehicle is configured to engage with the gripping tool. In some implementations, the gripping tool is configured to engage with the one or more recesses of the cardboard storage container.

Providing a storage and retrieval system with a gripping tool configured to engage with the at least one cardboard storage container allows for the cardboard storage container to be handled differently to, for example, plastic storage containers in the system. Using the same apparatus to engage a cardboard storage container as is used for, for example, plastic containers may not always be appropriate, as such an apparatus may not handle containers with the level of care required for a less robust material like cardboard. Providing a gripping tool configured to engage with the at least one cardboard storage container can thus reduce damage (e.g. ripping or tearing) to the cardboard storage container during the retrieval process. As the container handling vehicle is configured to engage with the gripping tool, the container handling vehicle can store and/or retrieve each type of storage container in the storage and retrieval system.

Also provided herein is a method 600 of retrieving a storage container in the storage and retrieval system described herein. A computer, controller or control unit maybe configured to carry out the steps of method 600.

At step 6100, a target cardboard storage container in a storage column is identified. The target cardboard storage container may be identified using its unique identifier, which may be marked on the cardboard storage container using a computer-readable identifier (e.g., a barcode, quick-response code or radio-frequency identification tag). The target cardboard storage container may be identified by the processing system 400, or may be identified by the computer, controller or control unit configured to carry out the method 600.

At step 6200, the container handling vehicle is caused to retrieve the target cardboard storage container. In configurations where the target cardboard storage container is located in a stack of storage containers, retrieving the target cardboard storage container may comprise repositioning one or more storage containers in the grid. In other words, where the target cardboard storage container is positioned below other storage containers in the stack, a controlled 'digging' operation takes place, where storage containers above the target cardboard storage container are sequentially lifted and repositioned, temporarily or permanently, to other locations in the grid.

In some implementations, causing the container handling vehicle to retrieve the target cardboard storage container comprises causing the container handling vehicle to engage with one or more recesses of the target cardboard storage container, and to remove the target cardboard storage container from the storage column. The one or more recesses may be the same or similar to the one or more recesses described in any embodiment of the storage and retrieval system described herein.

In other implementations, causing the container handling vehicle to retrieve the target cardboard storage container comprises causing the container handling vehicle to engage with a gripping tool, cause the gripping tool to engage with the target cardboard storage container, and remove the target cardboard storage container from the storage column. The gripping tool may be the same or similar to the gripping tool described in any embodiment of the storage and retrieval system described herein.

At step 6300, the container handling vehicle is caused to transport the target cardboard storage container to a target location. The target location may be outside the storage and retrieval system, and may be a shipping destination. For example, the target cardboard storage container may be transported from the storage and retrieval system to a desired shipping location. Alternatively, the cardboard storage container may be transported to a station outside of the grid of the storage and retrieval system.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage and retrieval system for storage containers, the system comprising:
a plurality of storage columns arranged in a grid, each storage column configured to store at least one storage container,
a plurality of storage containers comprising at least a cardboard storage container, the plurality of storage containers arranged in the plurality of storage columns; and
a container handling vehicle configured to retrieve a storage container of the plurality of storage containers from a storage column of the plurality of storage columns,
wherein the cardboard storage container is configured to be retrieved by the container handling vehicle.

2. The storage and retrieval system of claim 1, wherein the cardboard storage container comprises one or more recesses configured to engage with the container handling vehicle.

3. The storage and retrieval system of claim 2, wherein the one or more recesses are located at or near a rim of the cardboard storage container, or
wherein the one or more recesses are located in one or more side walls of the cardboard storage container.

4. The storage and retrieval system of any preceding claim, wherein the cardboard storage container comprises one or more reinforced walls.

5. The storage and retrieval system of any of claims 2 to 4, wherein the cardboard storage container comprises one or more reinforced regions around the one or more recesses.

6. The storage and retrieval system of any preceding claim, wherein the cardboard storage container comprises a first side wall, and a second side wall opposing the first side wall, wherein the first side wall and second side wall are reinforced walls, and/or
wherein a first end wall and a second end wall of the cardboard storage container are reinforced walls.

7. The storage and retrieval system of claim 4 or claim 6, wherein each of the one or more reinforced walls comprises a respective rigid frame.

8. The storage and retrieval system of any preceding claim, wherein the plurality of storage containers comprises a subset of cardboard storage containers.

9. The storage and retrieval system of any preceding claim, wherein the cardboard storage container is configured to be used as a shipping container.

10. The storage and retrieval system of any preceding claim, further comprising a gripping tool configured to engage with the cardboard storage container, wherein the container handling vehicle is configured to engage with the gripping tool.

11. The storage and retrieval system of any preceding claim, wherein each storage column of the plurality of storage columns is configured to store a plurality of storage containers in a vertical stack.

12. A method of retrieving a storage container in the storage and retrieval system of any of claims 1 to 11, the method comprising:
Identifying a target cardboard storage container in a storage column;
Causing the container handling vehicle to retrieve the target cardboard storage container; and
Causing the container handling vehicle to transport the target cardboard storage container to a target location.

13. The method of claim 12, wherein causing the container handling vehicle to retrieve the target cardboard storage container comprises causing the container handling vehicle to:
engage with one or more recesses of the target cardboard storage container; and
remove the target cardboard storage container from the storage column, or
wherein causing the container handling vehicle to retrieve the target cardboard storage container comprises causing the container handling vehicle to:
engage with a gripping tool;
cause the gripping tool to engage with the target cardboard storage container; and
remove the target cardboard storage container from the storage column.

14. The method of claim 12 or 13, wherein the target location is outside the storage and retrieval system.

15. A computer readable medium comprising instructions which, when executed, cause a computer to perform the method of any of claims 12 to 14.
